# EUROPÄISCHE PATENTSCHRIFT

(11) **EP 0 991 914 B1**
(45) Veröffentlichungstag und Bekanntmachung des Hinweises auf die Patenterteilung: **18.09.2002**
(21) Anmeldenummer: 98934979.0
(22) Anmeldetag: 18.06.1998
(51) Int. Cl.: G01B 7/30, G01D 5/14

(54) **DREHWINKELSENSOR MIT EINEM ASYMMETRISCH ANGEORDNETEN PERMANENTMAGNETEN**
ANGLE OF ROTATION SENSOR WITH AN ASYMMETRICALLY POSITIONED PERMANENT MAGNET
DETECTEUR D'ANGLE DE ROTATION AVEC UN AIMANT PERMANENT DISPOSE ASYMETRIQUEMENT

(30) Priorität: 24.06.1997 DE 19726691
(43) Veröffentlichungstag der Anmeldung: 12.04.2000
(73) Patentinhaber: Valeo Schalter und Sensoren GmbH, 74321 Bietigheim-Bissingen (DE)
(72) Erfinder: STUMPE, Reinhard, D-73765 Neuhausen (DE); GRABMAIER, Anton, D-74321 Bietigheim-Bissingen (DE); OSTERFELD, Martin, D-74321 Bietigheim-Bissingen (DE)
(74) Vertreter: Dreiss, Fuhlendorf, Steimle & Becker
(86) Internationale Anmeldenummer: EP9803739
(87) Internationale Veröffentlichungsnummer: WO98059212

(56) Entgegenhaltungen:
- EP-A- 0 718 494
- WO-A-97/43602
- WO-A-98/08060
- DE-A- 2 511 080
- DE-A- 2 815 217
- DE-A- 19 731 555
- US-A- 4 458 184
- US-A- 5 341 097

## Beschreibung

Die Erfindung betrifft einen Drehwinkelsensor

Bei Drehwinkelsensoren, bei denen die Drehstellung eines Permanentmagneten über mindestens ein Hall-Element ausgewertet wird, ist die Drehlage des in seiner Winkelstellung zu bestimmenden Körpers mit mindestens einem Permanentmagneten gekoppelt. Bei Änderung der Drehlage ändert sich auch die Verteilung des zugehörigen Magnetfeldes gegenüber einem ortsfest angeordneten Hall-Element. Aufgrund der an dem Hall-Element gemessenen Spannung lässt sich somit eine Aussage über die Winkelstellung des mit dem Permanentmagneten gekoppelten Körpers angeben.

Aus der US-A-4 829 248 ist ein Drehkörper bekannt, in dem eine Reihe von Permanentmagneten an dessen äusserem Umfang angeordnet sind. Wird der Körper gedreht, so ändert sich die Grösse und die Richtung des magnetischen Feldes, welches zwei Hall-Elemente durchdringt, welche im Bereich des Aussenumfangs gegenüber dem sich drehenden Körper ortsfest angeordnet sind. Nachteilig bei dieser Messeinrichtung ist es, dass dieser eine grosse Anzahl von Permanentmagneten benötigt. Ausserdem ist diese Messeinrichtung nur dafür ausgelegt, die Relativbewegung der Körperoberfläche gegenüber dem Hall-Sensor zu bewerten. Eine Absolutmessung der Stellung des Körpers auch innerhalb nur eines kleinen Winkelbereiches ist mit der aus der US-PS 4 829 248 ersichtlichen Messeinrichtung nicht möglich. Aus der US-PS 5 325 005 ist ein Synchronmotor bekannt, dessen Drehfeld in Abhängigkeit von der Drehlage des Ankers gesteuert werden soll. Dabei dienen die Hall-Sonden als Auslöser zur Weiterschaltung des Drehfeldes.

Aus der DE-A-28 15 217 ist ein Gleichstrommotor bekannt, bei dem die Drohstellung des Läufers mittels eines Lageabfühlelements, z.B. eines Hall-Generators abgefühlt wird. Dieses Lageabfühlelement ist auf dem Stator angeordnet und steht in axialer Richtung den Polschuhen des Läufers gegenüber. Dies bedeutet, daß das Läuferblech an der Innenseite mit Polschuhen versehen ist. Ein derartiger Aufbau ist zwar für einen Elektromotor erforderlich, jedoch zur reinen Ermittlung der Drehlage eines Körpers viel zu aufwendig und daher zu teuer.

Die Erfindung geht daher aus von einem wie aus der US-A-4,829,248 bekannten Drehwinkelsensor der sich aus dem Oberbegriff des Anspruchs 1 ergebenden Gattung. Bei den bekannten Drehwinkelsensoren, die mit Hall-Sonden arbeiten, liegt zwischen dem positiven und dem negativen Maximum des gemessenen Magnetflusses und damit der von der Hall-Sonde abgegebenen Spannung ein Drehwinkelwert von etwa 180°. Misst man innerhalb eines über 180° hinausgehenden Bereiches, so können die gemessenen Werte mehrdeutig sein. Durch die Verwendung von zwei und mehr Hall-Sonden lässt sich auch bei einem über 180° hinausgehenden Winkelwert eine Eindeutigkeit des Messergebnisses herstellen. Hierdurch werden aber eine grössere Anzahl von Hall-Sonden einschliesslich der notwendigen Auswertung benötigt. Aufgabe der Erfindung ist es, mit einem möglichst kleinen technischen Aufwand und insbesondere einer geringen Anzahl von Hall-Sonden einen weit über 180° hinausgehenden Winkelbereich hinsichtlich des Drehwinkels messen zu können.

Die Aufgabe wird durch einen Drehwinkelsensor gelöst, der die Merkmale des Anspruchs 1 aufweist.

Die Erfindung besteht im Prinzip also darin, den drehbaren Magneten mit einem im wesentlichen kreisförmig umgebenden Joch zu versehen und innerhalb des Jochs den Magneten (mit oder ohne Polschuhe versehen) derart auszuformen und/oder drehbar anzuordnen, dass er innerhalb eines weit über 180° liegenden Messbereichs eindeutige Messergebnisse liefert. Als Joch wird dabei ein ortsfester, magnetisch leitender und den Magneten umgebender Körper verstanden, der eine magnetisch gut leitende Strecke für den aus dem Magneten austretenden Magnetfluss bildet. Insofern wirkt das Joch etwa in der Form wie der Ständer eines Elektromotors. Das Joch übernimmt gleichzeitig noch eine Abschirmfunktion gegenüber möglichen von außen angreifenden elektromagnetischen Störfeldern. Das Joch muß dabei nicht genau kreisförmig sein. Es kann auch eine hiervon abweichende Form haben, soweit sie nur geeignet ist, den meßbaren Winkelbereich für den Drehwinkelsensor groß zu halten bzw. zu vergrößern. So kann das Joch beispielsweise auch eine elliptische Innenkontur besitzen. Für die Erfindung wichtig hauptsächlich ist, daß alle möglichen Maßrahmen miteinander kombiniert werden, die zwischen dem gemessenen Maximum und dem gemessenen Minimum des Magnetflusses einen möglichst großen Winkelbereich herstellen, wobei sich in dem sich anschließenden Meßbereich zum nächsten Maximum der Winkelbereich dementsprechend verkürzt, da naturgemäß nach einem Umfang von 360° bei dem Drehwinkelmesser die Ausgangslage wieder erreicht ist.

Die zu treffenden Maßnahmen bestehen im Prinzip also darin, den zu schaffenden Drehwinkelsensor derart asymmetrisch aufzubauen, so daß es einen Winkelbereich gibt, bei dem die Maxima möglichst weit auseinanderliegen. Eine besonders einfache Maßnahme hierzu bildet die Anwendung der Merkmale nach Anspruch 2. Dabei ist der Magnet gegenüber seiner Drehachse versetzt angeordnet. Zusätzlich kann auch die Drehachse des Magneten gegenüber der Drehachse des in seiner Drehbewegung zu messenden Körpers versetzt angeordnet sein. Dies ist aber nicht notwendig. Fluchten beide Achsen, so erhält man eine mechanisch einfachere Konstruktion, so daß der Magnet und der in seiner Drehbewegung zu messenden Körper auf einer gemeinsamen Achse befestigt sein können. Eine weitere Vereinfachung der mechanischen Konstruktion kann sich dadurch ergeben, daß die Merkmale nach Anspruch 3 angewendet werden. In diesem Falle fluchtet die Mittelachse des Jochs mit der Drehachse des Magneten, die wiederum mit der Drehachse des zu messenden Körpers fluchten kann. Hinsichtlich des Magneten gilt generell, daß dieser durchgehend magnetisiert sein kann oder aber auch Polschuhe aufweist, welche den Magnetfluß des Kernmagneten innerhalb des Jochraums in geeigneter Weise über einen Luftspalt zu dem Joch führen. Um den magnetischen Widerstand für den Magnetfluß möglichst gering zu halten, wird man in der Regel versuchen, den Luftspalt zwischen Magnet und Joch bzw. zwischen Polschuh und Joch über den gesamten Drehwinkel möglichst klein zu halten. Bei der versetzten Lage des Magneten gegenüber seiner Drehachse entsprechend der Merkmalskombination nach Anspruch 2 kann dabei der Magnet derart angeordnet werden, daß sein innerhalb des Magnetkerns verlaufender Fluß radial zur Kontur des benachbarten Jochbereichs oder aber tangential zu diesem Bereich verläuft. Diese Angaben lassen sich ebenso gut auf die Drehachse des Magneten beziehen, so daß derinnere Magnetfluß entweder radial zur Drehachse oder tangential zu dieser verläuft. In dem vorliegenden Ausführungsbeispiel wird ein radialer Verlauf des Magnetflusses vorgeschlagen. Soweit die anderen Bauteile des erfindungsgemäßen Drehwinkelsensors es aber zweckmäßig erscheinen lassen, so kann auch ein interner tangentialer Magnetfluß gewählt oder eine Zwischenlage für den Magneten festgelegt werden, die zwischen der radialen und der tangentialen Anordnung liegt.

Ordnet man den Magneten zu seiner Drehachse radial versetzt an und wählt man einen radialen internen Magnetfluß für den Magnetkern, so gelangt man zu der in Anspruch 4 beschriebenen Ausführungsform, die sich in einer hohen Flußdichte innerhalb des Jochs auszeichnet.

Eine hierfür besonders einfache mechanische Anordnung beschreibt die Merkmalskombination nach Anspruch 5. Man erhält hierbei einen Körper, dessen Kontur zwar kreissymmetrisch innerhalb des Jochs angeordnet ist, die aber einen stark asymmetrischen Verlauf des Magnetfeldes erzielt und somit wesentlich zur Verbesserung des gewünschten Ergebnisses beiträgt.

Die Merkmalskombination nach Anspruch 6 vereinfacht, wie weiter oben schon erläutert, den Aufbau des erfindungsgemäßen Drehwinkelsensors.

Eine besonders einfache Form für den Magneten, der hierbei vorzugsweise keine Polschuhe besitzt, ergibt sich aus der Merkmalskombination nach Anspruch 7. Danach besitzt der Magnet einen im wesentlichen kreisförmigen oder ringförmigen Querschnitt. Bei einem ringförmigen Aufbau wird das Magnetfeld bevorzugt entsprechend der Merkmalskombination nach Anspruch 8 ausgerichtet, d.h. der Ring besitzt in Umfangsrichtung zwei einander entgegengesetzte radial magnetisierte Bereiche, wobei der eine Bereich sich über einen sehr viel größeren Umfangswinkel als der andere Bereich erstreckt. Auf diese Weise wird die gewünschte unsymmetrische Verteilung des Flusses über den Jochumfang erreicht mit einer entsprechenden unsymmetrischen Verteilung auch des radial gerichteten Feldes innerhalb des Luftspaltes zwischen Magnet bzw. Polschuh und der Innenkontur des Joches.

Ein anderes Prinzip, die gewünschte Unsymmetrie zu erreichen, ergibt sich durch die Anwendung der in Anspruch 9 aufgeführten Merkmalskombination. Dabei wird von einem Permanentmagneten ausgegangen, welcher zentral zur Drehachse des Magneten, aber auch gegenüber dieser radial versetzt angeordnet sein kann. Dieser Permanentmagnet besitzt in der Regel nur eine durchgehende einseitig gerichtete Magnetisierung. Um die gewünschte Unsymmetrie des Magnetflusses zu erhalten oder zu verstärken bzw. an die gewünschten Erfordernisse anzupassen, wird der Permanentmagnet mit Polschuhen versehen, die bevorzugt kreissektorförmig ausgestattet sind. Um die Unsymmetrie zu erhalten, zu verstärken und an die gewünschten Erfordernisse anzupassen, dient die Merkmalskombination in Anspruch 10, gemäß der die Polschuhe entlang der Kontur des Jochs sich über einen unterschiedlichen Winkelbereich erstrecken. Zusätzlich oder abweichend hiervon kann aber auch die der Innenkontur des Jochs gegenüberliegende Mantelfläche des Polschuhs mit einer abweichenden Krümmung versehen werden, so daß die Breite des Luftspalts zwischen Polschuh und Innenfläche des Jochs über den Umfangswinkel sich ändert.

Wie eingangs schon erwähnt, läßt sich der Meßbereich durch die Verwendung von zwei und mehr Hall-Sonden vergrößerr. Eine besonders empfindliche Messung läßt sich durch die in Anspruch 11 geschilderte Merkmalskombination erreichen. Dabei wird das Hall-Element oder die vorzugsweise um jeweils 90° zueinander versetzten Hall-Elemente derart in das Joch eingesetzt, daß sie von dem dort tangential verlaufenden Magnetfluß geschnitten werden. Der Aufbau des Jochs sollte zumindest in diesem Bereich so gewählt werden, daß möglichst der gesamte Magnetfluß die Fläche des Hall-Elements schneidet. Es ist aber nicht zwingend notwendig, daß das Hall-Element (radial) in das Joch eingefügt ist, es kann auch, wie dies beispielsweise aus der US-PS 5 325 005 zu sehen ist, das Hall-Element oder die Hall-Elemente derart eingefügt sein, daß sie durch den Magnetfluß in radialer Richtung durchströmt werden. Das bedeutet, daß die Hall-Elemente vor dem magnetisch leitenden Joch vorzugsweise im Luftspalt ortsfest angeordnet sind.

Ausführungsbeispiele der Erfindung werden nachfolgend anhand der Zeichnung erläutert. Darin zeigt:
- Fig. 1: eine erste Ausführungsform der Erfindung unter Verwendung einer einzigen Hall-Sonde;
- Fig. 2: eine der Ausführungsform nach Fig. 1 entsprechende zweite Ausführungsform unter Verwendung von zwei Hall-Sensoren;
- Fig. 3: Ausgangssignale der Sensoren nach Fig. 2;
- Fig. 4: eine dritte Ausführungsform der Erfindung;
- Fig. 5: eine besonders günstige vierte Ausführungsform der Erfindung;
- Fig. 6: der Feldverlauf der Ausführungsform nach Fig. 5;
- Fig. 7: den tangentialen Fluss innerhalb des Jochs in Abhängigkeit von der Winkelstellung des Magneten; und
- Fig. 8: eine mit Fig. 4 vergleichbare Aus führungsform.

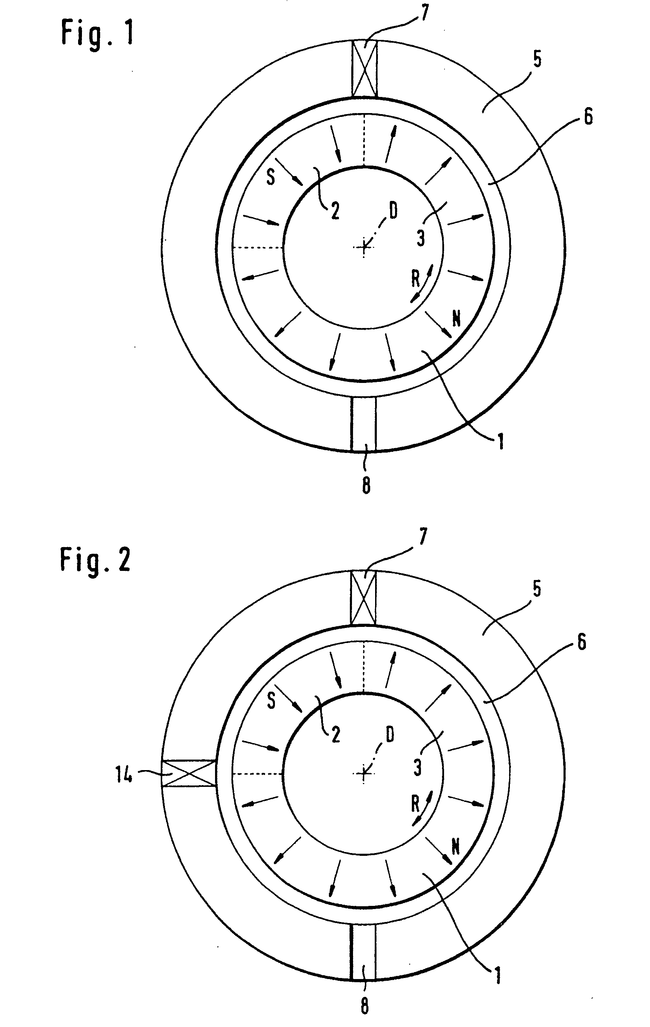

In Fig. 1 ist in Draufsicht ein als Hohlzylinder ausgestalteter Permanentmagnet 1 gezeigt, mit einem ersten Magnetisierungsbereich 2 und einem zweiten Magnetisierungsbereich 3. Die Magnetisierungsrichtung innerhalb des Bereiches 2 ist der innerhalb des Bereiches 3 entgegengesetzt, was durch entsprechende Pfeile angedeutet ist. Hierdurch ergibt sich ein unsymmetrisches magnetisches Feld, wie es im Rahmen der vorliegenden Erfindung angestrebt wird. Bei dem Magneten handelt es sich, wie schon erwähnt, um einen Permanentmagneten. Dies ist für die Erfindung allerdings nicht zwingend. Ggf. kann statt des Permanentmagneten auch ein mittels eines Gleichstrom magnetisierter Magnet verwendet werden. Wesentlich ist, dass sich eine unsymmetrische Magnetisierung ergeben muss, d den eindeutigen Messbereich des erfindungsgemässen Drehwinkelsensors in der gewünschten Grösse hält. Der Permanentmagnet 1 ist in nicht näher dargestellter Form um die durch den Punkt D angedeutete, senkrecht zur Betrachtungsebene verlaufende Drehachse drehbar, so daß die Achse D die Mittelachse des Hohlzylinders 1 angibt. Den Permanentmagneten 1 umgibt im wesentlichen kreisförmig ein magnetisch leitendes Joch 5, welches ebenfalls die Form eines Hohlzylinders hat. In das Joch ist in radialer Richtung ein Eall-Sensor 7 eingefügt. Zwischen der Außenkontur des Permanentmagneten 1 und der Innenkontur des Jochs 5 befindet sich ein Luftspalt 6, der einen magnetischen Widerstand darstellt. Im Bedarfsfall kann das Joch 5 auch noch mit einem Luftspalt 8 versehen sein, dessen Form und Lage sich aus dem gewünschten Verlauf des Magnetfeldes ergibt und dessen genaue Lage unter Umständen durch Versuche ermittelt werden muß. Es ist für den Durchschnittsfachmann unschwer erkennbar, daß durch die in Fig. 1 gezeigte Konstellation sich ein asymmetrisches Magnetfeld ergibt. Hierbei treten z.B. die Feldlinien des Magnetfelds in Richtung der Magnetisierungspfeile N von dem zweiten Bereich 3 über den Luftspalt 6 in das Joch 5 ein, indem sie bis zur Austrittsstelle aus dem Joch in nicht dargestellter Form geführt werden. Schließlich tritt das Magnetfeld etwa auf der gegenüberliegenden Seite des Jochs 5 aus diesem in den Luftspalt 8 und von dort in den ersten Bereich 2 in Richtung der Pfeile S in den ersten Magnetisierungsbereich 2 wieder ein. Je nach Ausgestaltung des Feldes, welches von der Breite des Jochspaltes 8 und des Luftspaltes 6 abhängt sowie dem Umfang der Magnetisierungsbereiche des Permanentmagneten 1 und anderer Parameter ist die Ausführungsform nach Fig. 1 in der Lage, einen Winkelbereich zu messen, der weit über den sonst üblichen 180° liegt.

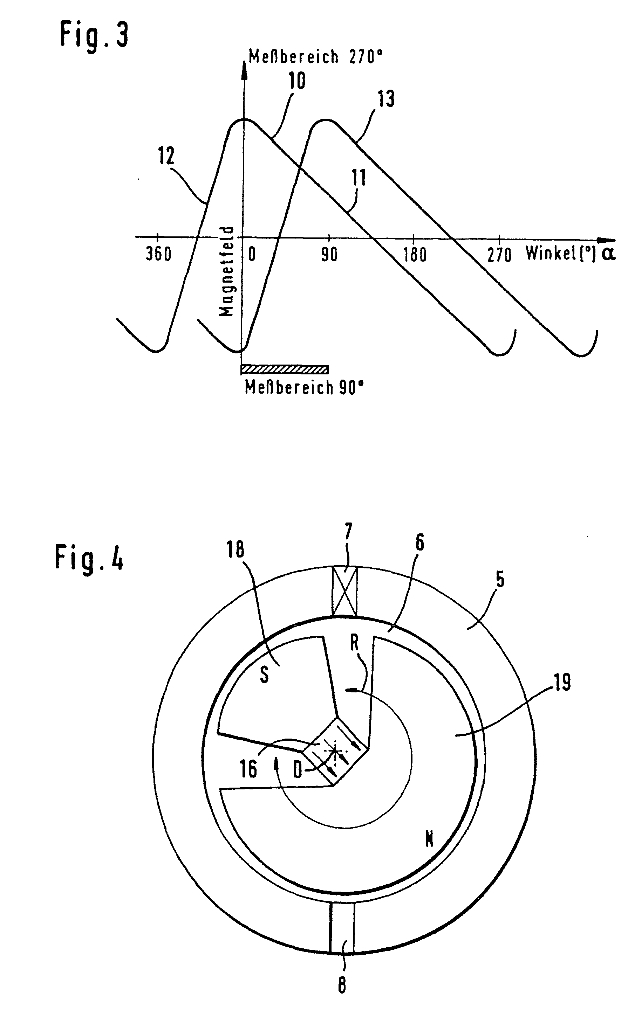

In Fig. 3 stellt die Kurve 10 den möglichen Verlauf des Magnetflusses und damit auch der Spannung an der Hall-Sonde über den Winkelbereich dar. Dabei zeigt sich (bei einer entsprechenden Annahme des Null-Wertes des Winkels α), daß über einen Bereich von 270° der den Hall-Sensor 7 durchdringende Magnetfluß mit wachsendem Winkelwert immer mehr abnimmt und schließlich steigend negativ wird. Im Ergebnis erhält man somit am Ausgang des Hall-Sensors über einen Winkelbereich von knapp 270° einen sich stetig ändernden Spannungswert, so daß der gemessene Spannungswert in diesem Bereich eindeutig einen definierten Winkelwert bestimmt. Läßt man also nur den Meßbereich von 270° zu, so läßt sich aufgrund des Spannungswertes die Drehstellung des Magneten und damit auch die Drehstellung des Körpers direkt messen, dessen Drehwinkel zu messen ist. Berücksichtigt man die Möglichkeit, in Abhängigkeit von der Drehwinkeländerung auch die Spannungsänderung zu erkennen, so läßt sich aufgrund der unterschiedlichen Steigungen der Kurvenabschnitte 11 und 12 auch noch sagen, in welchem Kurvenabschnitt man sich gerade befindet, indem das Differential der Spannung bzw. die Steigung der Spannungskurve zur Festlegung des Kurvenabschnitts ausgenutzt wird, in dem gerade gemessen wird. Unter diesen Einschränkungen ist also ein Meßbereich von fast 360° auswertbar.

Fig. 2 zeigt ein zweites Ausführungsbeispiel, welches sich von dem Ausführungsbeispiel nach Fig. 1 nur dadurch unterscheidet, daß winkelversetzt um 90° ein zweites magnetfeldempfindliches Element (also vorzugsweise eine Hall-Sonde) in das Joch 5 eingefügt ist. Hierdurch kann man den Kurvenzug 13 in Fig. 3 erhalten, welcher unter entsprechenden Voraussetzungen etwa dem Kurvenzug 11 um 90° versetzt entsprechen kann. Betrachtet man nur den Winkelbereich von 270°, so zeigt sich, daß der Kurvenzug 13 in einem Meßbereich von 90° linear stark ansteigt, wobei der Anstieg erheblich größer ist als der Abfall des Kurvenabschnitts 11 des Kurvenzugs 10. Diese Tatsache läßt sich dazu ausnutzen, in einem Meßbereich von 90° innerhalb des Gesamtmeßbereiches von 270° mit Hilfe der zweiten Hall-Sonde 14 mit größerer Empfindlichkeit zu messen. Das heißt, es ist also hier eine genauere Messung möglich.

Fig. 4 zeigt ein drittes Ausführungsbeispiel, wobei das Joch 5 gegenüber der ersten Ausführungsform nach Fig. 1 unverändert ist. Der blockförmige Permanentmagnet 16 ist wiederum, wie durch den Richtungspfeil R angedeutet, um eine Drehachse D drehbar. Der blockförmige Magnet 16 ist nur in einer einzigen Richtung magnetisiert. Die unsymmetrische Magnetisierung wird nun dadurch erhalten, daß zwei Polschuhe 18,19 an den Blockmagneten 16 angefügt sind, welche unterschiedliche Formen haben. Im vorliegenden Fall sind die Polschuhe im wesentlichen kreissektorförmig, wobei der erste Polschuh 18 sich über einen kleineren Sektor erstreckt als der zweite Polschuh 19. Die Feldverteilung ist in etwa wieder analog zur Feldverteilung nach den Ausführungsformen 1 und 2, so daß wiederum der Kurvenzug 10 nach Fig. 3 erwartet werden kann.

Aus Fig. 4 ist weiterhin die Möglichkeit ersichtlich, durch Änderung der lichten Weite des Luftspalts 6 über den Winkelbereich, die Unsymmetrie des Magnetfeldes zu fördern und zu beeinflussen. Dies kann durch eine geänderte Krümmung des Polschuhs 19 gegenüber der Krümmung der Innenkante des Jochs 5 geschehen, wie dies beispielsweise im Zusammenhang mit dem ersten Polschuh 18 gezeigt ist. Es ist aber auch möglich, den Drehpunkt D des Magneten und damit der Polschuhe gegenüber der Mittelachse des Polschuhs zu verschieben, mit anderen Worten also den Magneten 16 exzentrisch zu lagern. Dies ist im Zusammenhang mit dem zweiten Polschuh 19 angedeutet. Beide Möglichkeiten lassen sich wahlweise oder auch in Kombination anwenden, wie in Fig. 4 dargestellt.

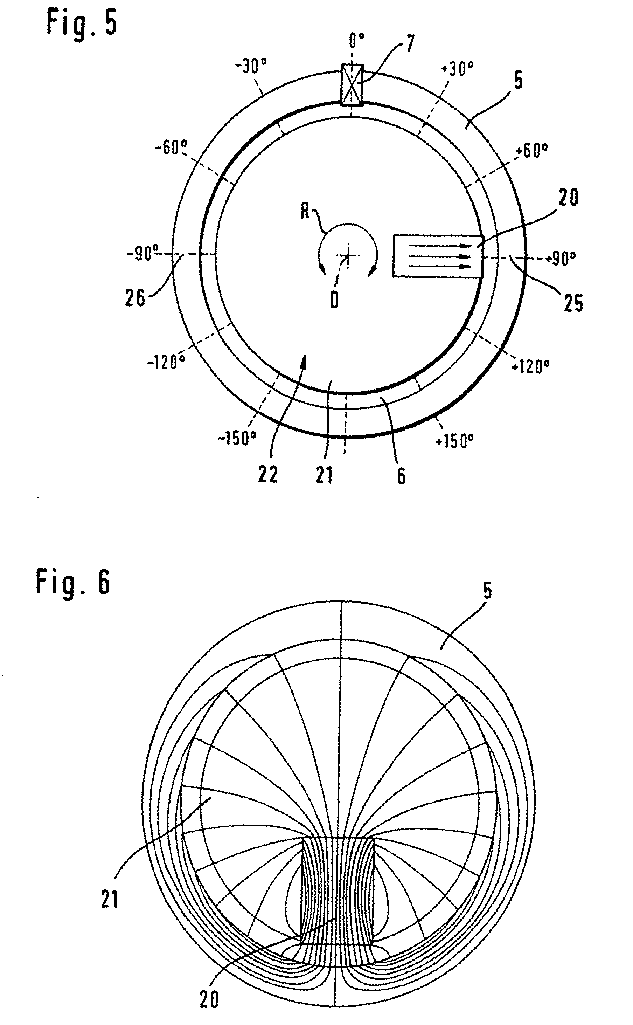

Fig. 5 zeigt eine vierte Ausführungsform, die besonders hervorgehoben wird, weil sie mit einem einfachen Aufbau das angestrebte asymmetrische Feld kostengünstig erreicht. Die Einheit aus Permanentmagnet 20 und Polschuh 21 dreht sich um den Drehpunkt D. Diese Einheit 22 ist zwar gegenüber dem Drehpunkt D und dem Joch 5 symmetrisch, das gilt aber nicht für das magnetische Feld, welches in der gewünschten Weise unsymmetrisch ist. Der sich ergebende Feldverlauf ist in Fig. 6 dargestellt und zeigt, daß sowohl die Flußdichte innerhalb des Jochs 5 als auch innerhalb des Luftspalts 6 sich über den Winkelbereich stetig ändert. Da ausgehend von dem Bezirk 25 (in Fig. 5 +90°) bis zu dem Bezirk 26 (in Fig. 5 - 90°) sich der Fluß über den Querschnitt des Jochs 5 in beiden Jochhälften immer mehr verkleinert, im Bezirk 26 aber gleichzeitig die Magnetisierungsrichtung bei gleichbleibender Drehrichtung ändert, ergibt sich also ausgehend von +90° (Bezirk 25) im Uhrzeigersinn (siehe Fig. 6) ein starkes in positiver Richtung verlaufendes Feld, welches immer schwächer wird, bis es sich schließlich bei -90° umkehrt und mit umgekehrtem Richtungssinn bis zum Bezirk 25 hin (also bis nach +90°) immer mehr ansteigt.

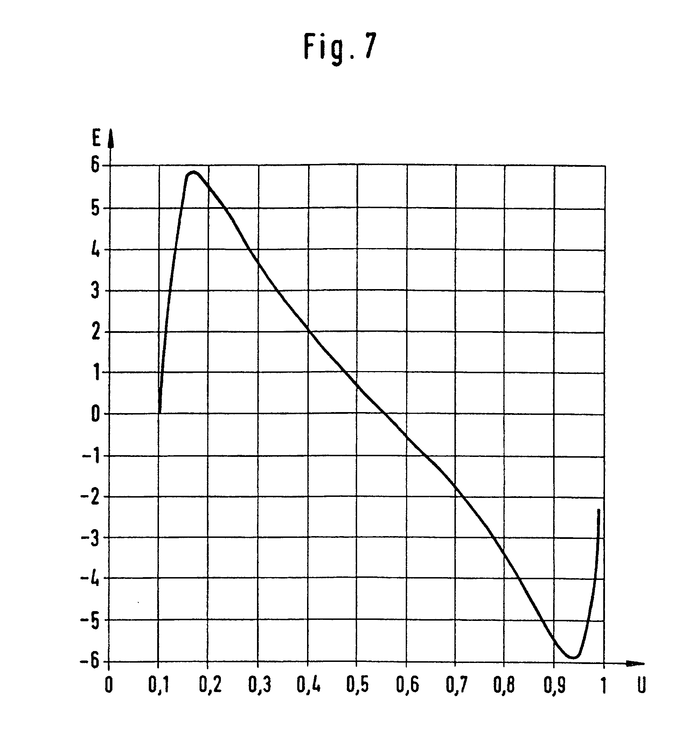

Fig. 7 zeigt den Verlauf des Magnetflusses über den Umfang des Joches 5. Im Ergebnis läßt sich sagen, daß man einen stetig sich in gleicher Richtung ändernden Verlauf über 8/10 des Umfangs erhält, das sind etwa 290°. Durch die Anwendung weiterer in der vorliegenden Anmeldung beschriebener Maßnahmen ist eine zusätzliche Vergrößerung des möglichen Meßbereichs zu erwarten. In Fig. 7 ist die Größe der Meßeinheit E, die als Magnetfluß oder aber auch als Spannung an der betreffenden Hall-Sonde aufgefaßt werden kann, über dem Umfang U aufgetragen.

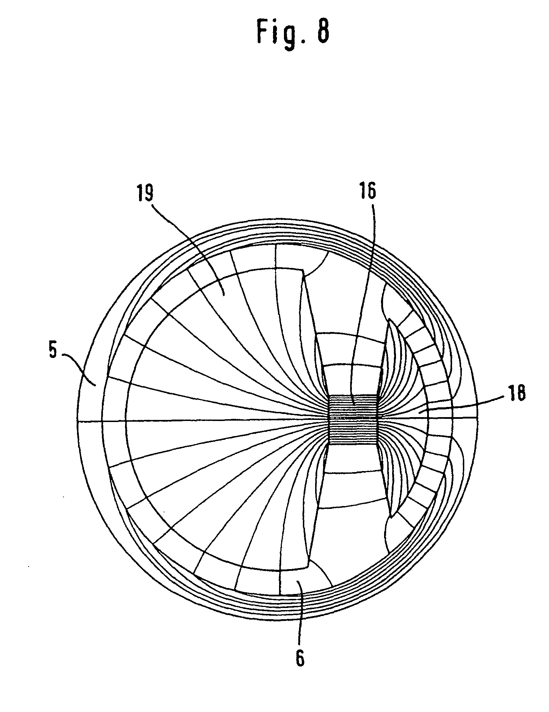

Fig. 8 zeigt eine vierte Ausführungsform, die der dritten Ausführungsform der Erfindung nach Fig. 4 sehr ähnlich ist. Der wesentliche Unterschied besteht in Fig. 8 im Gegensatz zu Fig. 4 darin, daß die lichte Weite des Luftspalts 6 über beiden Polschuhen gleich groß gewählt ist, so daß bei sehr kleinem Luftspalt die Krümmung der äußeren Kontur der Polschuhe 19,18 und der inneren Kontur des Jochs 5 weitgehend gleich sind. In Abweichung von Fig. 4 wurde allerdings in Fig. 8 das durch den Fluß des Magneten 16 bewirkte Magnetfeld in Fig. 8 aingetragen. Man erkennt, daß der Magnetfluß der Querschnitt des Jochs aber auch über den Luftspalt 6 sich über einen sehr großen Winkelbereich stetig ändert. Praktische Versuche haben ergeben, daß über diesen Winkelbereich die Abhängigkeit des Magnetflusses von dem Umfang sehr linear ist, so daß eine Eichung des Drehwinkelmessers sich stark vereinfacht. Für die Erfindung wesentlich ist, daß zur Messung des Magnetfeldes nicht unbedingt eine Hall-Sonde verwendet werden muß. Es sind noch andere für die Messung von Magnetfeldern zweckmäßige Sonden für den Einsatz an der vorliegenden Erfindung geeignet. Da sich bei der vorliegenden Ausführungsform der Magnetfluß im Luftspalt über einen sehr großen Winkelbereich stetig ändert, ist es, wie weiter oben schon im Zusammenhang mit der US-PS 5 325 005 erläutert u.U. auch zweckmäßig, die Sonde in den Luftspalt zwischen Permanentmagnet und Joch 5 bzw. dem oder den Polschuhen und dem Joch 5 einzufügen. Allerdings muß bei dieser Ausführungsform der Erfindung mit einem verminderten Magnetfluß gerechnet werden, welcher den Magnetfeldsensor (Hall-Sonde) schneidet. Da der Magnetfluß innterhalb des Jochs 5 senkrecht zu dem Magnetfluß innerhalb des Luftspalts 6 verläuft, ist auch die magnetfeldempfliche Sonde entsprechend auszurichten.

Die Erfindung lässt sich also wie folgt zusammenfassend beschreiben:

Herkömmliche rotatorische Sensoren auf magnetischer Basis haben im allgemeinen einen maximalen Messbereich von 180° Dieses ist meistens durch die Symmetrie des magnetischen Kreises bestimmt. Diese Symmeltrie wird bei dieser Art von magnetischen Sensoren durch den magnetischen Kreis insbesondere durch den Magnet und die Polschuhe geprägt. In der hier vorliegenden Anordnung wird die Symmetrie durch einen entsprechenden Magneten aufgehoben. Dazu kann z. B. ein isotroper Magnet verwendet werden, der in geeigneter Weise magnetisiert wurde. Alternativ kann dieser Magnet auch zusammengesetzt aufgebaut sein, d. h. aus einem Magneten und zwei entsprechenden Polschuhen.

Der Sensor nach Fig. 5 benutzt einen entsprechenden Magnetkreis, der einen eindeutigen Messbereich von bis zu 330° ermöglicht. Die Abb. 5 zeigt das Prinzip des Magnetfeldsensors. Dieser Sensor besteht aus einem rotierenden Magneten, der exzentrisch gelagert ist. Der Magnet auf der rotierenden Welle wird von einem zylindrischen Polschuh umschlossen. Eine Magnetfeldsonde misst nun die tangentiale Komponente des Magnetfeldes im Sensor, d. h. den Magnetfluss im zylindrischen Polschuh. Um den tangentialen Fluss zu messen, wird eine oder mehrere Magnetfeldsonden senkrecht zum Umfang des äusseren Polschuhs eingesetzt.

Der Vorteil dieser Anordnung ist die gute Ausnutzung des Magnetflusses durch den äusseren Polschuh, was die Verwendung von relativ kleinen Magneten erlaubt. Ein weiterer Vorteil dieses Sensors besteht darin, dass nur einfache und kostengünstige Magnetformen benötigt werden. Für die Funktion des Sensors ist nur der relative Winkel zwischen äußerem Polschuh mit Magnetfeldsonde und innerem Magnet auf der Drehachse relevant. D.h. es kann entweder der äußere Polschuh rotieren oder der innere Magnet.

## Patentansprüche

1. Drehwinkelsensor, bei dem das Magnetfeld mindestens eines Magneten (1, 16, 20), vorzugsweise Permanentmagneten, um eine Drehachse (D) des Magneten drehbar ist, wobei die Drehachse (D) des Magneten (1, 16, 20) mit der Drehachse eines drehbaren Körpers koppelbar ist, dessen Drehwinkel gemessen werden soll und wobei ausserhalb der Drehachse (D) mindestens eine Hall-Sonde (7, 14) angeordnet ist, deren einer Auswerteeinrichtung zugeführte Spannung sich in Abhängigkeit von dem Drehwinkel des Magnetfeldes ändert, wobei das Magnetfeld des Magneten in einem den Magneten im wesentlichen kreisförmig umgebenden Joch (5) zwischen den Polen (N/S) des Magneten geführt ist und der gegebenenfalls mit einem Polschuh (18, 19) versehene Permanentmagnet durch entsprechende Ausformung und/oder radial gegenüber der Drehachse versetzte Anordnung einen über einen mindestens 250° betragenden Winkelbereich einen sich stetig in eine Richtung über den Drehwinkel ändernden Magnetfluss aufweist, wobei, wenigstens eine Hall-Sonde (7, 14) in das Joch (5) eingefügt ist und der mindestens eine Magnet (1, 16, 20) direkt ohne Zwischenschaltung weiterer Magnete von einem Luftspalt (6) und vom Joch (5) umgeben ist.

2. Drehwinkelsensor nach Anspruch 1, **dadurch gekennzeichnet, dass** der Magnet (1, 16, 20) gegenüber seiner Drehachse (D) radial versetzt angeordnet ist.

3. Drehwinkelsensor nach Anspruch 1 oder 2, **dadurch gekennzeichnet, dass** das Joch (5) im wesentlichen die Form eines Hohlzylinders hat, dessen Längsachse mit der Drehachse (D) des Magneten (1, 16, 20) fluchtet.

4. Drehwinkelsensor nach einem der vorangegangenen Ansprüche, **dadurch gekennzeichnet, dass** der Permanentmagnet (16, 20) mit einem Polschuh (18, 19, 22) versehen ist und dass der Polschuh zu einer quer zur Flussrichtung des Permanentmagneten verlaufenden, die Drehachse einschliessenden Ebene spiegelunsymmetrisch aufgebaut ist.

5. Drehwinkelsensor nach Anspruch 4, **dadurch gekennzeichnet, dass** der Polschuh (22) im wesentlichen kreiszylinderförmig ist und dass in die Mantelfläche des Polschuhs (22) eine in radiale Richtung weisende Ausnehmung eingefügt ist, die den Magneten (20) aufnimmt, dessen magnetischer Fluss ebenfalls in radiale Richtung weist.

6. Drehwinkelsensor nach einem der vorangegangenen Ansprüche, **dadurch gekennzeichnet, dass** die Drehachse (D) des gegebenenfalls mit einem Polschuh versehenen Permanentmagneten (1, 16, 20) mit der Mittelachse bzw. Längsachse des Jochs (5) fluchtet.

7. Drehwinkelsensor nach einem der vorangegangenen Ansprüche, **dadurch gekennzeichnet, dass** der Permanentmagnet im wesentlichen die Form eines Zylinders bzw. Hohlzylinders hat, der vorzugsweise einen kreisförmigen bzw. ringförmigen Querschnitt besitzt.

8. Drehwinkelsensor nach Anspruch 7, **dadurch gekennzeichnet, dass** der als Hohlzylinder ausgestaltete Permanentmagnet (1) eine Magnetisierung besitzt, die innerhalb des Magnetkörpers in radialer Richtung verläuft, wobei die in Richtung Drehachse gerichtete Magnetisierung sich über einen von der entgegengesetzt gerichteten Magnetisierung abweichenden Winkelbereich erstreckt.

9. Drehwinkelsensor nach einem der vorangegangenen Ansprüche, **dadurch gekennzeichnet, dass** der als Permanentmagnet ausgestaltete Magnet sich mit radial erstreckenden Polschuhen versehen ist (18, 19), die im wesentlichen kreissektorförmig ausgestaltet sind.

10. Drehwinkelsensor nach Anspruch 9, **dadurch gekennzeichnet, dass** die Kreissektoren (18, 19) der beiden Polschuhe sich über unterschiedliche Winkelbereiche erstrecken.

11. Drehwinkelsensor nach einem der vorangegangenen Ansprüche, **dadurch gekennzeichnet, dass** die wenigstens eine Hall-Sonde (7, 14) in radialer Richtung in das Joch (5) eingefügt ist.

12. Drehwinkelsensor nach einem der vorangegangenen Ansprüche, **dadurch gekennzeichnet, dass** die wenigstens eine Sonde (7, 14) tangential zur Innenfläche des Jochs (5) in dem zwischen dem Magnet (1, 16, 20) bzw. Polschuhen (18, 19) und dem Joch (5) befindlichen Luftspalt (6) angeordnet ist.

## Claims

1. Angle of rotation sensor, wherein the magnetic field of at least one magnet (1, 16, 20), preferably a permanent magnet, can be turned about a rotational axis (D) of the magnet, wherein the rotational axis (D) of the magnet (1, 16, 20) can be coupled with the rotational axis of a rotatable body, the angle of rotation of which needs to be measured, wherein at least one Hall probe (7, 14) is arranged outside of the rotational axis (D), and wherein the voltage of said Hall probe which is fed to an evaluation unit changes as a function of the angle of rotation of the magnetic field, wherein the magnetic field of the magnet extends between the poles (N/S) of the magnet through a yoke (5) that essentially surrounds the magnet in circular fashion, and wherein the permanent magnet which, if so required, is provided with a pole shoe (18, 19) is realized and/or arranged to be radially offset relative to the rotational axis (D) such that it detects a magnetic flux that continuously changes in one direction over the angle of rotation, over an angular range of at least 250° wherein at least one Hall probe (7, 14) is inserted into the yoke (5) and the at least one magnet (1, 16 ,20) is surrounded directly without interconnection of further magnets of an air gap (6) and the yoke(5).

2. Angle of rotation sensor according to claim 1, **characterized by** the fact that the magnet (1, 16, 20) is arranged to be radially offset relative to its rotational axis (D).

3. Angle of rotation sensor according to claim 1 or 2, **characterized by** the fact that the yoke (5) essentially has the shape of a hollow cylinder, the longitudinal axis of which is aligned with the rotational axis (D) of the magnet (1, 16, 20).

4. Angle of rotation sensor according to one of the previous claims, **characterized by** the fact that the permanent magnet (16, 20) is provided with a pole shoe (18, 19, 22), and by the fact that the pole shoe is realized mirror-symmetrically with reference to a plane that extends transverse to the flux direction of the permanent magnet and includes the rotational axis.

5. Angle of rotation sensor according to claim 4, **characterized by** the fact that the pole shoe (22) essentially has the shape of a circular cylinder, and by the fact that a radially oriented recess that accommodates the magnet (20), the magnetic flux of which is also oriented in the radial direction, is arranged in the outer surface of the pole shoe (22).

6. Angle of rotation sensor according to one of the previous claims, **characterized by** the fact that the rotational axis (D) of the permanent magnet (1, 16, 20) that, if so required, is provided with a pole shoe, is aligned with the central axis or the longitudinal axis of the yoke (5).

7. Angle of rotation sensor according to one of the previous claims, **characterized by** the fact that the permanent magnet essentially has the shape of a cylinder or hollow cylinder, which preferably has a circular or annular cross section.

8. Angle of rotation sensor according to claim 7, **characterized by** the fact that the permanent magnet (1) which is realized in the form of a hollow cylinder has a magnetization that extends radially within the magnet body, wherein the magnetization that is oriented in the direction towards the rotational axis extends over an angular range that differs from that of the oppositely oriented magnetization.

9. Angle of rotation sensor according to one of the previous claims, **characterized by** the fact that the magnet which is realized in the form of a permanent magnet is provided with radially extending pole shoes (18, 19) that are essentially realized in the shape of sectors of a circle.

10. Angle of rotation sensor according to claim 9, **characterized by** the fact that the sectors (18, 19) of the two pole shoes extend over different angular ranges.

11. Angle of rotation sensor according to one of the previous claims, **characterized by** the fact that the at least one Hall probe (7, 14) is radially inserted into the yoke (5).

12. Angle of rotation sensor according to one of the previous claims, **characterized by** the fact that the at least one probe (7, 14) is arranged tangentially to the inner surface of the yoke (5) in the air gap (6) situated between the magnet (1, 16, 20) or pole shoes (18, 19) and the yoke (5).

## Revendications

1. Capteur d'angle de rotation, dans lequel le champ magnétique d'au moins un aimant (1, 16, 20), de préférence un aimant permanent, est susceptible de tourner autour d'un axe de rotation (D) de l'aimant, l'axe de rotation (D) de l'aimant (1, 16, 20) pouvant être couplé avec l'axe de rotation d'un corps susceptible de tourner, dont il faut mesurer l'angle de rotation, et au moins une sonde à effet Hall étant disposée en dehors de l'axe de rotation (D), dont la tension acheminée vers une unité d'analyse varie en fonction de l'angle de rotation du champ magnétique, le champ magnétique de l'aimant étant guidé vers une culasse (5) sensiblement concentrique à l'un des aimants et située entre les pôles (N/S) de l'aimant, et l'aimant permanent, muni éventuellement d'une corne polaire (18, 19), comporte, en raison d'une conception correspondante et/ou d'une disposition décalée radialement par rapport à l'axe de rotation, dans une plage angulaire de 250 ° au moins, un flux magnétique variant en continu dans une direction sur l'angle de rotation, dans lequel au moins une sonde à effet Hall (7, 14) est insérée dans la culasse (5) et ledit au moins un aimant (1, 16, 20) est entouré directement, sans intercaler d'autres aimants, par un entrefer (6) et par la culasse (5).

2. Capteur d'angle de rotation selon la revendication 1, **caractérisé en ce que** l'aimant (1, 16, 20) est décalé dans le sens radial par rapport à son axe de rotation (D).

3. Capteur d'angle de rotation selon la revendication 1 ou 2, **caractérisé en ce que** la culasse (5) présente sensiblement la forme d'un cylindre creux, dont l'axe longitudinal est aligné avec l'axe de rotation (D) de l'aimant (1, 16, 20).

4. Capteur d'angle de rotation selon l'une des revendications précédentes, **caractérisé en ce que** l'aimant permanent (16, 20) est muni d'une corne polaire (18, 19, 22) et **en ce que** ladite corne polaire est conçue symétriquement par rapport à un plan transversal au flux de l'aimant permanent et incluant l'axe de rotation.

5. Capteur d'angle de rotation selon la revendication 4, **caractérisé en ce que** la corne polaire (22) est conçue avec une forme sensiblement cylindrique circulaire et **en ce qu'**un évidement orienté dans le sens radial est réalisé dans la paroi latérale de la corne polaire (22), dans lequel est logé l'aimant (20), dont le flux magnétique est également dirigé dans le sens radial.

6. Capteur d'angle de rotation selon l'une des revendications précédentes, **caractérisé en ce que** l'axe de rotation (D) de l'aimant permanent (1, 16, 20) muni éventuellement d'une corne polaire est aligné avec l'axe médian, à savoir l'axe longitudinal de la culasse (5).

7. Capteur d'angle de rotation selon l'une des revendications précédentes, **caractérisé en ce que** l'aimant permanent possède sensiblement la forme d'un cylindre, plus précisément d'un cylindre creux, dont la section est sensiblement circulaire ou annulaire.

8. Capteur d'angle de rotation selon la revendication 7, **caractérisé en ce que** l'aimant permanent (1) conçu en forme de cylindre creux possède une aimantation qui s'étend dans le sens radial à l'intérieur du corps magnétique, sachant que l'aimantation orientée en direction de l'axe de rotation s'étend sur une plage angulaire qui s'écarte de l'aimantation orientée dans le sens opposé.

9. Capteur d'angle de rotation selon l'une des revendications précédentes, **caractérisé en ce que** l'aimant conçu sous forme d'aimant permanent est muni de cornes polaires (18, 19) s'étendant dans le sens radial, lesquelles sont conçues sensiblement en forme de secteurs de cercle.

10. Capteur d'angle de rotation selon la revendication 9, **caractérisé en ce que** les secteurs de cercle (18, 19) des deux cornes polaires s'étendent sur des plages angulaires différentes.

11. Capteur d'angle de rotation selon l'une des revendications précédentes, **caractérisé en ce que** ladite au moins une sonde à effet Hall (7, 14) est insérée dans le sens radial dans la culasse (5).

12. Capteur d'angle de rotation selon l'une des revendications précédentes, **caractérisé en ce que** ladite au moins une sonde à effet Hall (7, 14) est disposée tangentiellement à la face intérieure de la culasse (5) dans l'entrefer (6) située entre l'aimant (1, 16, 20) ou les cornes polaires (18, 19) et la culasse (5).
